# EUROPÄISCHE PATENTANMELDUNG

(11) **EP 1 342 511 A1**
(43) Veröffentlichungstag der Anmeldung: **10.09.2003**
(21) Anmeldenummer: 03000472.5
(22) Anmeldetag: 11.01.2003
(51) Int. Cl.: B09B 3/00, G21F 9/36, G21F 9/30

(54) **Verfahren zur Konditionierung von gefährlichen Abfällen sowie Vorrichtung zur Durchführung des Verfahrens**

(30) Priorität: 21.01.2002 DE 10201996
(71) Anmelder: FORSCHUNGSZENTRUM JÜLICH GMBH, 52425 Jülich (DE)
(72) Erfinder: Wolf, Josef, Dr., 52428 Jülich (DE)

(57) **Zusammenfassung**

Die Erfindung betrifft ein Verfahren zur Konditionierung von gefährlichen Abfällen, insbesondere von radioaktiven Abfällen, in verpreßtem und/oder zementiertem Zustand, wobei die verpreßten und/oder zementierten Abfälle in einem Bad mit einem unter vorgegebenen Lagerbedingungen dauerelastischen sowie dampf- und wasser-undurchlässigen Beschichtungsmaterial in verflüssigtem Zustand umflutet, anschließend aus dem Bad herausgehoben und zum Abtropfen bzw. Aushärten der Beschichtung aufgestellt werden.

Ferner betrifft die Erfindung eine Vorrichtung zur Durchführung des Verfahrens mit einer Handhabungsvorrichtung und einem Behälter, wobei ein Tauchbadbehälter zum Eintauchen der verpreßten und/oder zementierten Abfälle vorgesehen und oberhalb des Tauchbehälters eine Kranvorrichtung zur Handhabung der bevorzugt in einem mit Durchlassöffnungen versehenen Aufnahmekorb aufgenommenen Abfälle angeordnet ist.

## Beschreibung

Die Erfindung betrifft ein Verfahren zur Konditionierung von gefährlichen Abfällen, insbesondere von radioaktiven Abfällen, in verpreßtem und/oder zementiertem Zustand sowie eine Vorrichtung zur Durchführung des Verfahrens.

Gefährliche Abfälle, die für lange Zeit von der Biosphäre abgeschirmt gelagert werden sollen, bedürfen einer sorgfältigen Vorbereitung. Beispielsweise werden radioaktive Abfälle, die für die Einbringung in ein späteres Endlager vorgesehen sind, so konditioniert, daß auch bei einer 30-bis 40-jährigen Zwischenlagerung der sichere Einschluß der radioaktiven Stoffe gewährleistet bleibt und die hinsichtlich der Endlagerung geforderten Eigenschaften nicht verloren gehen. Dazu werden die radioaktiven Abfälle üblicherweise durch Zementierung gebunden oder unter Hochdruck verdichtet und anschließend in einem Behälter, meist einem metallischen Container, mit Beton zu einem Block vergossen.

Ein Problem bei dieser Vorgehensweise besteht darin, daß die metallische Umhüllung und der den Hohlraum ausfüllende Beton Poren, Risse oder anderweitige Beschädigungen aufweisen können. Solche Beschädigungen können beispielsweise durch thermische Belastungen oder auch durch den Einfluß der Luftfeuchtigkeit sowie unerwünschte Wechselwirkungen beim Verguß mit dem Beton entstehen. Insbesondere ist es bekannt, daß konditionierte Abfälle, z. B. verpreßte oder zementierte Asche oder Konzentrate, durch den Einfluß der Luftfeuchtigkeit zu chemischen Reaktionen neigen und/oder stark korrosiv auf metallische Umhüllungen wirken, so daß diese angegriffen und undicht werden können. Ferner sind insbesondere radioaktive Abfälle hygroskopisch und sind daher gegen Luftfeuchtigkeit und Wassereinwirkung beim Verguß der Abfallcontainer mit Beton gefährdet. Eine für sehr lange Zeiträume sichere Verwahrung der Abfälle ist damit nicht gewährleistet.

Aufgabe der Erfindung ist es daher, ein Verfahren zur Konditionierung von gefährlichen Abfällen sowie eine dafür vorgesehene Vorrichtung anzugeben, mit denen eine über lange Zeiträume zuverlässig undurchlässige Umhüllung der Abfälle erreicht wird.

Gelöst wird diese Aufgabe bei einem Verfahren der eingangs genannten Art dadurch, daß die verpreßten und/oder zementierten Abfälle in einem Bad mit einem unter vorgegebenen Lagerbedingungen dauerelastischen sowie dampfund wasser-undurchlässigen Beschichtungsmaterial in verflüssigtem Zustand umflutet, anschließend aus dem Bad herausgehoben und zum Abtropfen bzw. Aushärten der Beschichtung aufgestellt oder aufgehängt werden. Entsprechend weist die Vorrichtung zur Durchführung des Verfahrens einen Tauchbadbehälter zum Eintauchen der verpreßten und/oder zementierten Abfälle auf, wobei oberhalb des Tauchbehälters eine Kranvorrichtung zur Handhabung der bevorzugt in einem mit Durchlaßöffnungen versehenen Aufnahmekorb aufgenommenen Abfälle angeordnet ist.

Bei dem erfindungsgemäßen Verfahren wird somit entsprechend vorbereiteter Abfall im verpreßten und/oder zementierten Zustand in einem Bad mit einem flüssigen Beschichtungsmaterial umflutet, das nach einer Verfestigung unter vorgegebenen Lagerbedingungen dauerelastisch sowie dampf- und wasser-undurchlässig ist. Auf diese Weise können insbesondere radioaktive Abfälle sicher gegen Feuchtigkeit auch während des Betonvergusses abgeschirmt und damit die im Stand der Technik auftretenden Probleme zuverlässig vermieden werden.

Um eine mechanisch stabile Umhüllung der Abfälle zu erreichen, werden die beschichteten Abfälle in einem Behälter eingefüllt und darin mit einer hydraulisch härtenden Vergußmasse, insbesondere Beton, vergossen. Dieser vergossene Behälter kann problemlos gehandhabt, gestapelt und/oder deponiert werden.

Alternativ kann der Vergußblock auch aus dem Behälter ausgeformt und entweder als nicht weiter umhüllter Block oder nach Einbringung in einen gesonderten Deponierbehälter wie beispielsweise ein Metallfaß zwischen- und endgelagert werden. Um ein Einbringen in ein derartiges Metallfaß zu ermöglichen, sollte das Metallfaß einen geringfügig größeren Innendurchmesser als den Außendurchmesser des Vergußblockes aufweisen. Ergänzend kann der sich dabei zwischen Vergußblock und Metallfaß bildende Hohlraum mit einem geeigneten Material vergossen werden. Alternativ ist auch eine Einbettung der erfindungsgemäß erstellten Vergußblöcke in einen weiteren, umhüllenden Betonmantel möglich.

Gemäß einer weiteren Ausführungsform der Erfindung ist vorgesehen, daß die Abfälle in dem Behälter mittels einer geeigneten Evakuierungseinrichtung evakuiert und im evakuierten Zustand mit dem flüssigen Beschichtungsmaterial umflutet werden. Hierdurch kann bereits beim Vergießen der Abfälle vermieden werden, daß Luft und Luftfeuchtigkeit an den Abfällen innerhalb der vom Beschichtungsmaterial gebildeten Umhüllung eingeschlossen werden. Unerwünschte Reaktionen mit eingeschlossenen Luft- und Wasserteilchen und somit ein Aufbrechen der konditionierten Abfälle von der Innenseite her können somit wirksam vermieden werden.

In weiterer Ausgestaltung kann vorgesehen sein, daß die Abfälle insbesondere vor dem Evakuieren getrocknet werden. Auf diese Weise kann dem Einschluß von unerwünschter Feuchtigkeit beim Umflutungsvorgang noch sicherer vorgebeugt werden, da chemisch hochreaktive Wassermoleküle bereits vor dem Evakuieren durch den Trocknungsvorgang verringert werden.

Um eine vollständige Umschließung der Abfallstücke ohne Bildung von Hohlräumen sicherzustellen, erfolgt das Umfluten der verpreßten und/oder zementierten Abfälle zweckmäßiger Weise in einem beheizten Behälter. Hierdurch wird erreicht, daß sich das Beschichtungsmaterial während des Umflutens nicht oder nur wenig abkühlt und nicht frühzeitig verfestigen kann mit dem Ergebnis, daß es selbst in sehr feine Poren und Risse dringt und innenliegende Hohlräume vollständig ausfüllt. Hierzu ist an dem Tauchbadbehälter eine geeignete Beheizungsvorrichtung vorgesehen.

Wenn die Abfälle bereits während des Evakuierens erwärmt werden, wird bereits beim Evakuieren etwaige Restfeuchte aus den verpreßten und/oder zementierten Abfällen und insbesondere aus Hohlräumen herausgetrieben.

Bevorzugt ist die Dauer und/oder Intensität der Beheizung so gewählt, daß der im Behälter eingefüllte verpreßte und/oder zementierte Abfall vollständig auf eine vorbestimmte Mindesttemperatur erwärmt wird. Die Mindesttemperatur sollte dabei oberhalb der Erstarrungstemperatur des Beschichtungsmaterials unter den Einfüllbedingungen liegen.

Um das Ausformen zu erleichtern, wird der Vergußblock zum Ausformen aus dem Behälter zweckmäßigerweise abgekühlt. Dabei kann die Abkühlung des Vergußblockes entweder durch passives Abkühlen oder durch aktives Abkühlen erfolgen. Durch den Schrumpfungsprozeß des sich abkühlenden Vergußblockes wird die Ausformung unterstützt.

Bevorzugt wird als Beschichtungsmaterial Bitumen, Wachs oder ein Kunststoff verwendet und zur Verflüssigung erwärmt. Das Beschichtungsmaterial soll dauerhaft elastisch sowie dampf- und wasserundurchlässig sein.

In vorrichtungsgemäßer Ausgestaltung ist weiter bevorzugt, daß ein Evakuierbehälter mit Mitteln zum Evakuieren vorgesehen ist, wobei der Evakuierbehälter dichtend auf den Tauchbehälter aufsetzbar ausgebildet ist und an seiner Unterseite ein öffenbarer Deckel vorgesehen ist, so daß die im Evakuierbehälter aufgenommenen Abfälle im wesentlichen unter Vakuum in den Tauchbehälter überführt werden können. Somit können die Abfälle zunächst im Evakuierbehälter, noch vor dem Eintauchen in das Beschichtungsmaterial mit Vakuum beaufschlagt werden. Über den öffenbaren Deckel an der Unterseite des Evakuierbehälters werden dann die im Evakuierbehälter aufgenommenen Abfälle in den Tauchbehälter abgesenkt und in das Beschichtungsmaterial eingetaucht.

Wenn eine weitere Beheizungsvorrichtung am Evakuierbehälter vorgesehen ist, um den darin aufgenommenen Abfall vorzuwärmen, wird ein vorschnelles Aushärten des Beschichtungsmaterials beim Kontakt mit dem zu umhüllenden Abfall vermieden. Das Beschichtungsmaterial kann somit auch kleinste Risse und Hohlräume ausfüllen.

Nachfolgend wird ein bevorzugtes Ausführungsbeispiel der Erfindung anhand der beiliegenden Zeichnung detailliert beschrieben. Darin zeigt in schematisierter Schnittdarstellung:
- Fig. 1: einen Evakuierbehälter mit anhängendem Aufnahmekorb für radioaktiven Abfall,
- Fig. 2: den mit den Abfällen befüllten Evakuierbehälter aufgesetzt auf einen Tauchbadbehälter,
- Fig. 3: den mit den radioaktiven Abfällen beladenen Aufnahmekorb im Tauchbadbehälter und
- Fig. 4: den herausgehobenen und zum Abtropfen und Aushärten des Beschichtungsmaterials abgestellten Aufnahmekorb mit radioaktiven Abfällen.

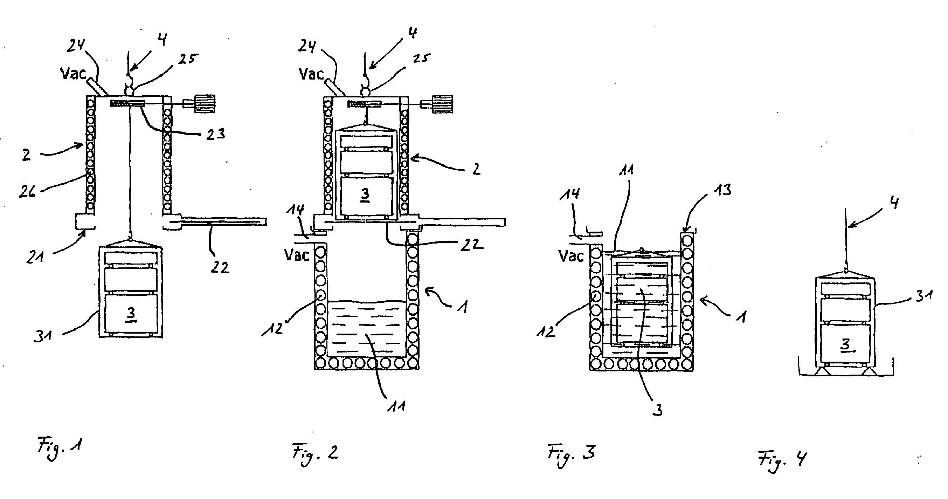

In Fig. 1 ist ein Evakuierbehälter 2 in geschnittener Seitenansicht dargestellt. Der Evakuierbehälter 2 weist an seiner Unterseite einen Aufsetzflansch 21 auf, in dem ein öffenbarer Deckel 22 angeordnet ist. Der Deckel 22 ist in geöffneter Stellung dargestellt. Bevorzugt ist der Deckel 22 als Schieber ausgebildet. In der Wandung des Behälters 2 ist eine Beheizungsvorrichtung 26 integriert.

Ferner ist am Evakuierbehälter 2 eine Öse 25 zur Handhabung des Evakuierbehälters 2 mit einem nicht näher dargestellten Kran (Haken 4) vorgesehen. An den Innenraum des Evakuierbehälters 2 ist eine Evakuierleitung 24 angeschlossen, mit der über eine nicht dargestellte Vakuumpumpe der Innenraum mit Vakuum beaufschlagbar ist.

Im Inneren des Evakuierbehälters 2 ist an der Decke eine Hebevorrichtung 23 befestigt, mit der ein unterhalb des Evakuierbehälters abgestellter Aufnahmekorb 31 in den Evakuierbehälter 2 anhebbar ist. Der Aufnahmekorb 31 ist mit hochdruckverpressten oder zementierten radioaktiven Abfällen 3 beladen.

In Fig. 2 ist der Evakuierbehälter 2 mit seinem Aufsetzflansch 21 auf einem Tauchbadbehälter 1 aufgesetzt. Der Tauchbadbehälter 1 ist ein oben offener Behälter zur Aufnahme eines thermisch verflüssigten Beschichtungsmaterials 11. Zur Erwärmung des Beschichtungsmaterials 11 ist in den Wandungen des Tauchbadbehälters 1 eine Beheizungsvorrichtung 12 vorgesehen. Die Öffnung des Tauchbadbehälters 1 weist einen Ansetzflansch 13 auf, auf den der Aufsetzflansch 21 des Evakuierbehälters 2 dichtend aufsetzbar ist. Ferner ist in den Innenraum des Tauchbadbehälters eine Evakuierleitung 14 angeschlossen, womit der Tauchbadbehälter 1 über eine nicht dargestellte Vakuumpumpe mit Vakuum beaufschlagbar ist.

Nachfolgend wird der Ablauf des erfindungsgemäßen Beschichtungsverfahrens schrittweise anhand der Fig. 1 bis 4 beschrieben.

In Fig. 1 wird ein mit radioaktiven Abfällen 3 beladener Aufnahmekorb 31, der unterhalb des Evakuierbehälters 2 angeordnet ist, von der Hebevorrichtung 23 des Evakuierbehälters 2 angehoben und in den Evakuierbehälter 2 eingezogen.

Anschließend wird der Deckel 22, hier in Art eines Schiebers, geschlossen. Nun wird die Beheizungsvorrichtung 26 des Evakuierbehälters 2 aktiviert und über Evakuierleitung 24 der Behälterinnenraum mit Vakuum beaufschlagt. Folglich wird der radioaktive Abfall 3 erwärmt und ein Großteil der Luftfeuchtigkeit und Luft abgezogen. Nunmehr wird mit dem äußeren Kran, von dem nur Haken 4 dargestellt ist, der Evakuierbehälter 2 einschließlich der darin aufgenommenen Abfälle 3 angehoben und auf den Ansetzflansch 13 des Tauchbadbehälters 1 aufgesetzt.

Nun wird nacheinander der Freiraum im Tauchbadbehälter 1 über Evakuierleitung 14 mit Vakuum beaufschlagt, der Schieber 22 des Evakuierbehälters 2 geöffnet und der mit den Abfällen 3 beladene Aufnahmekorb 31 mittels Hebevorrichtung 23 in den Tauchbadbehälter 1 abgelassen. Dabei taucht der Aufnahmekorb 31 in das flüssige Beschichtungsmaterial 11 und der darin aufgenommene Abfall 3 wird vom Beschichtungsmaterial 11 umflutet.

Im Anschluß daran werden der Tauchbadbehälter 1 und der Evakuierbehälter 2 belüftet und die Verbindung der Hebevorrichtung 23 mit dem Aufnahmekorb 31 gelöst und der Evakuierbehälter 2 mit dem äußeren Kran 4 abgehoben (Fig. 3).

Im Tauchbadbehälter 1 ist die Beheizungsvorrichtung 12 ebenfalls aktiviert, um das Beschichtungsmaterial thermisch zu verflüssigen und beim Umflutungsvorgang eine vollständige Beschichtung und Einbringung in Hohlräume und Risse an den Abfallpartikeln zu unterstützen.

Nach einer gewünschten Verweildauer wird der Aufnahmekorb 31 mit den Abfällen 3 von dem nicht dargestellten Kran mittels Haken 4 aus dem Tauchbadbehälter 1 herausgehoben und auf einem Abtropfstand entsprechend Fig. 4 abgestellt. Überschüssiges Beschichtungsmaterial tropft nun von den verpressten und/oder zementierten Abfällen 3 ab und aufgrund der Abkühlung härtet die Beschichtung dauerelastisch aus.

Nachfolgend können die so beschichteten bzw. imprägnierten Abfälle in einem Deponiercontainer eingefüllt und mit Beton vergossen werden. Weder die Luftfeuchtigkeit noch die Wasserbelastung bei der hydraulischen Aushärtung des Betons können mit den hygroskopischen Abfällen in Berührung gelangen.

### Bezugszeichenliste

- 1: Tauchbadbehälter
- 11: Beschichtungsmaterial
- 12: Beheizungsvorrichtung
- 13: Ansetzflansch
- 14: Evakuierleitung

- 2: Evakuierbehälter
- 21: Aufsetzflansch
- 22: öffenbarer Deckel
- 23: Hebevorrichtung
- 24: Evakuierleitung
- 25: Öse
- 26: Beheizungsvorrichtung

- 3: verpreßte und/oder zementierte Abfälle
- 31: Aufnahmekorb

- 4: Haken

## Patentansprüche

1. Verfahren zur Konditionierung von gefährlichen Abfällen, insbesondere von radioaktiven Abfällen, in verpreßtem und/oder zementiertem Zustand, **dadurch gekennzeichnet, daß**
die verpreßten und/oder zementierten Abfälle in einem Bad mit einem unter vorgegebenen Lagerbedingungen dauerelastischen sowie dampf- und wasser-undurchlässigen Beschichtungsmaterial in verflüssigtem Zustand umflutet, anschließend aus dem Bad herausgehoben und zum Abtropfen bzw. Aushärten der Beschichtung aufgestellt oder aufgehängt werden.

2. Verfahren nach Anspruch 1, **dadurch gekennzeichnet, daß** die beschichteten Abfälle in einen Behälter eingefüllt werden, der anschließend mit einer hydraulisch härtenden Vergußmasse vergossen wird.

3. Verfahren nach Anspruch 1 oder 2, **dadurch gekennzeichnet, daß** die Abfälle evakuiert und im evakuierten Zustand mit dem flüssigen Beschichtungsmaterial umflutet werden.

4. Verfahren nach Anspruch 3, **dadurch gekennzeichnet, daß** die Abfälle vor dem Evakuieren getrocknet werden.

5. Verfahren nach einem der vorangehenden Ansprüche, **dadurch gekennzeichnet, daß** das Umfluten der Abfälle in einem beheizten Bad erfolgt.

6. Verfahren nach Anspruch 5 und 3 oder 4, **dadurch gekennzeichnet, daß** die Abfälle bereits während des Evakuierens erwärmt werden.

7. Verfahren nach Anspruch 5 oder 6, **dadurch gekennzeichnet, daß** die Dauer und/oder Intensität der Beheizung so gewählt ist, daß der behandelte Abfall vollständig auf eine vorbestimmte Mindesttemperatur erwärmt wird.

8. Verfahren nach einem der vorangehenden Ansprüche 2 bis 7, **dadurch gekennzeichnet, daß** die mit dem Beschichtungsmaterial imprägnierten Abfälle nach einer Verfestigung des Vergußmaterials einen Vergußblock bilden, der aus dem Behälter ausgeformt wird.

9. Verfahren nach Anspruch 8, **dadurch gekennzeichnet, daß** der Vergußblock zum Ausformen aus dem Behälter abgekühlt wird.

10. Verfahren nach einem der vorangehenden Ansprüche, **dadurch gekennzeichnet, daß** als Beschichtungsmaterial Bitumen, Wachs oder ein Kunststoff verwendet und zur Verflüssigung erwärmt wird.

11. Vorrichtung zur Durchführung des Verfahrens gemäß einem der vorangehenden Ansprüche, **dadurch gekennzeichnet, daß** ein Tauchbadbehälter (1) zur Aufnahme eines flüssigen Beschichtungsmaterials (11) zum Eintauchen der verpreßten und/oder zementierten Abfälle (3) vorgesehen ist, wobei oberhalb des Tauchbehälters (1) eine Kranvorrichtung zur Handhabung der bevorzugt in einem mit Durchlaßöffnungen versehenen Aufnahmekorb (31) aufgenommenen Abfälle (3) angeordnet ist.

12. Vorrichtung nach Anspruch 11, **dadurch gekennzeichnet, daß** eine Beheizungsvorrichtung (12) am Tauchbadbehälter (1) zur Erwärmung und Verflüssigung des Beschichtungsmaterials (11) vorgesehen ist.

13. Vorrichtung nach Anspruch 11 oder 12, **dadurch gekennzeichnet, daß** ein Evakuierbehälter (2) mit Mitteln zum Evakuieren (24) vorgesehen ist, wobei der Evakuierbehälter (2) dichtend auf den Tauchbehälter (1) aufsetzbar ausgebildet ist und an seiner Unterseite ein öffenbarer Deckel (22) vorgesehen ist, so daß die im Evakuierbehälter (2) aufgenommenen Abfälle (3) im wesentlichen unter Vakuum in den Tauchbehälter (1) überführt werden können.

14. Vorrichtung nach Anspruch 11, 12 oder 13, **dadurch gekennzeichnet, daß** auch an dem Tauchbadbehälter (1) Mittel zum Evakuieren (14) angeschlossen sind.

15. Vorrichtung nach Anspruch 11, 12, 13 oder 14, **dadurch gekennzeichnet, daß** eine weitere Beheizungsvorrichtung (26) am Evakuierbehälter (2) vorgesehen ist, um den darin aufgenommenen Abfall (3) vorzuwärmen.
